# EUROPEAN PATENT APPLICATION

(11) **EP 4 079 610 A1**
(43) Date of publication of application: **26.10.2022**
(21) Application number: 22169522.4
(22) Date of filing: 22.04.2022
(51) Int. Cl.: B62D 33/02, B62D 27/06

(54) **A VERTICAL STAKE ARRANGEMENT FOR RIGIDLY CONNECTING A LOWER END OF A VERTICAL STAKE TO A HORIZONTAL CROSS-BEAM**

(30) Priority: 23.04.2021 SE 2150514
(71) Applicant: Timbtech International AB, 696 33 Askersund (SE)
(72) Inventor: ANDERSSON, Christer, 696 33 ASKERSUND (SE); FRANZÉN, Håkan, 692 71 KUMLA (SE)
(74) Representative: Bjerkén Hynell KB

(57) **Abstract**

This invention relates to stake arrangement for connecting a lower end of a vertical stake (2) to a horizontal cross-beam (1) adapted to be attached to a beam in a carrying structure of a vehicle, said arrangement comprising:
- said cross-beam (1) having an end surface (15);
- a plurality of bores provided with threads in said end surface (15), said threaded bores extending in a longitudinal direction of the cross-beam (1), preferably in parallel to one another,
- a plurality of openings (23, 24) provided at said lower end of the stake (2), said plurality of openings extending crosswise in relation to a longitudinal axis (III) of the stake and being aligned with the threaded bores; and
- a plurality of screws (30) extending through the openings (23, 24) of the stake and engaging the threads of the threaded bores in the cross-beam (1) to connect the lower end of the stake arrangement to the end surface (15) of the cross-beam, wherein said stake arrangement (2) comprises an upper stake member (20) and a lower stake end member (21), which are attached to each other by welds (206, 207, 208, 209), wherein said lower stake end member (21) includes a body member (29) including said plurality of openings (23, 24), and that a longish reinforcement member (28) is included in said lower stake end member (21), said reinforcement member (28) having an upper portion (28B) protruding a distance (d) into an open inner space of said upper stake member (20).

## Description

### TECHNICAL FIELD

The present invention relates to vertical stake arrangement providing a rigid and compact stake including an arrangement for rigidly connecting a lower end of the vertical stake to a horizontal cross-beam adapted to be attached to a longitudinal beam in a carrying structure of a vehicle.

Such arrangements are widely used for the transportation of lumber such as wood logs on trucks, trailers, railway wagons, and other vehicles.

It is evident for the skilled person that the definitions horizontal and vertical shall be construed in a broad manner to assist in defining the basic relationship between the cross bar and the stake, i.e. details that normally are extending substantially horizontal substantially vertical, respectively, without any limiting effect. For instance, the stake that is extending substantially vertical will normally need to provide some flexibility to counteract/resist the pressure from the load in a good manner (e.g. of timber) and accordingly in an unloaded state it may be preferred to have the stakes inclined slightly inwardly.

### BACKGROUND ART

In the present context the term "stake" is intended to include all types of vertical supports or posts, and the term "cross-beam" is intended to include any bunk or other beam extending crosswise over a chassis or the like of a vehicle (*vide* US 6,299,395 B1, for example) for forming part of a bottom of a space for carrying the lumber load, while the stakes limit the longitudinal sides of the space. For reasons of transport economy, the space should be as large as permitted by various regulations and laws. As a rule, the height of the space is fixed, but the width between the stakes should be as large as possible in order to permit a larger load.

In many cases it is desirable that the loading platform formed has a stake anchoring arrangement that is flexible in such a way that the driver also when out on the roads is able to adapt the appearance/configuration of the loading platform to various loads in an easy way without the need of workshop tools.

Theoretically, a loading platform having a large number of round sockets into which round stakes easily can be lowered or removed may be a solution as disclosed in WO 2005/100137 A1, for example. However, as both stated in laws and demanded by the drivers, the stakes have to be securely/locked to the structure carrying the load, so that the stakes cannot jump out of the sockets during transportation, or rattle or shake when without load.

Prior art flexible, disengageable anchoring of stakes in stake anchoring arrangements can be divided into two main groups, a first group using a locking mechanism arranged in the stake and a second group using a locking mechanism arranged in or at the socket.

Examples of disengageable anchoring in stake anchoring arrangements belonging to the first group are disclosed in EP 0 244 383 A2 and SE 451 987, for example, wherein the locking mechanism is arranged in the stake, and after the stake has been lowered into the socket, the driver activates the locking mechanism by turning a control by means of a large special wrench. The locking mechanism then engages the socket and prevents the stake from jumping out of the socket. A disadvantage is that each separate stake must comprise a locking mechanism making each stake expensive and complicated to manufacture, and at the same time each stake becomes unnecessarily heavy and cumbersome for the driver to handle. Moreover, such solutions are also suffering from the problem that the stakes rattle and shake in the sockets, especially when not exposed to a load, *i.e.* when the truck is driven unloaded, which is irritating for the driver and detrimental for the stake as well as for the socket.

Examples of disengageable anchoring of stake anchoring arrangements of the second group are disclosed in SE 451 009 and WO 93/24344, in which the stakes at their lower ends comprise threaded holes. A bolt is provided in a through hole in the bottom of the socket and screwed into the threaded hole of the stake from below, the bolt pulling the stake downwards toward the bottom of the socket. In this way the stake is prevented from jumping out of the socket. However, also these solutions suffer from the problem that the stakes when not exposed to load rattle and shake in the sockets, which also may result in the bolt coming loose. Moreover, it is cumbersome to access the bolts at the underside of the loading platform. In applications where the stakes are to be placed in the middle of the loading platform, it can even be impossible to access the underside of the socket. Examples of attempts to solve the problem of rattle and shaking are described in SE 405 235 and SE 463 759, where different types of wedge assemblies for pressing the stakes against the walls of the sockets are used. The shown wedge assemblies use two interacting wedge members, which are axially displaced in relation to each other by means of a bolt and nut arrangement. Even though these solutions tolerably solve the problem of rattle and shaking, the above mentioned difficulties of reaching the bolts and nuts of the locking mechanism remain.

WO 2011/159239 A1 discloses another stake anchoring arrangements of the second group. Here the wedge is spring-loaded and supplemented by a catch that is operated by the insertion of the stake into the socket to release the spring-loaded wedge so that it can move to a stake locking position.

As suggested in EP 2 724 919 A2, the problem of rattling and shaking may be solved by welding a socket to the stake. The socket has two parallel wings, which in the direction of the vehicle are attached by screws to a front side and a rear side of the cross-beam. This means that in a loaded vehicle, the stake will expose the screws to shearing forces. A screw is an engineering element that is designed to take up tension, not shearing forces.

In all of these stake anchoring arrangements a socket is used, and the use of a socket at each end of the cross-beam reduces the utilizable distance, *i.e.* the inner width, between the stakes mounted at the two ends of the cross-beam.

EP-B- 3130529 discloses a solution to most the above-mentioned problems. However, the design does present some challenges regarding production thereof, which is a disadvantage.

### SUMMARY OF THE INVENTION

The main object of the present invention is to provide vertical stake arrangement providing a rigid and compact stake including an arrangement for rigidly connecting a lower end of the vertical stake to a horizontal cross-beam adapted to be attached to a longitudinal beam in a carrying structure of a vehicle, which arrangement is such that it without sacrificing the advantages of prior art arrangements permits an increase in the utilizable distance, i.e. the inner width, between the stakes mounted at the two ends of the cross-beam. In accordance with the present invention this object is achieved by means of a vertical stake arrangement as defined in claim 1.

By refraining from using sockets, the utilizable distance, *i.e.* the inner width, between the stakes can be increased, and by using screws extending through the stake into the end surface of the cross-beam, they are easily accessible and the force from a lumber load on the stake will expose the screws only to tension, not to shearing. Further, thanks to the design the screw heads will be readily accessible at an outside of the stake. To take up the tension, the screws can be as long as required in order not to be permanently deformed by the tensile force from the load. Thanks to the optimization according to the invention many advantages may be gained, e.g. a cost-effective production for producing a relatively thin stake (e.g. thinner than 100 mm, more preferred thinner than 80 mm) that provide extra loading space and/or a lower weight, etc.

According to further preferred features:
- the fixed attachment of said upper stake member (20) to said lower stake end member (21) is arranged by welds, which provides the advantage of enabling cost-efficient production and high strength, wherein preferably said upper stake member (20) has a front face (20A) having a lower edge (200E) that is positioned at a higher level (L1) than a lower edge (201E) of a back face (20B) of said upper stake member (20) which provides the advantage of enabling extra strength.
- The body member (29) includes a support space (290) arranged to provide support to a lower part (28A) of the enforcement member (28), which may assist in providing the advantage of enabling cost-efficient production and high strength, wherein preferably said support space (290) is provided by means of two wing members (291).
- The enforcement member (28) has a longitudinal extension that exceeds the width at least two times, preferably having a longitudinal extension that exceeds the width in the range of 4-12 times, which provides the advantage of enabling compactness and high strength, enforcement member (28) is in the form of a profile that is mirror symmetric in relation to two orthogonal longitudinal planes.

Further advantages will become apparent from the detailed description below.

### BRIEF DESCRIPTION OF THE DRAWINGS

In the following, the invention will be described in more detail with reference to preferred embodiments and the appended drawings.
- Fig. 1: is a perspective view of a lower part of a stake arrangement in accordance with the invention,
- Fig. 2: is a front view of a stake arrangement in accordance with the invention,
- Fig. 3: is a side view of a stake arrangement in accordance with the invention.
- Fig. 4: is a cross-sectional view showing a part of the profile used at the lower half of the stake,
- Fig. 5: is a side view of the lower end of a stake prior to being integrated in the stake arrangement in accordance with the invention,
- Fig. 6: is a perspective view of a lower body member prior to being integrated in the stake arrangement in accordance with the invention,
- Fig. 7: is a front view of a lower body member having an enforcement attached thereto prior to being integrated in the stake arrangement in accordance with the invention,
- Fig. 8: is a side view of the members shown in Fig. 6,
- Fig. 9: is a perspective view of a distance device that may be arranged in contact with end of the cross beam, i.e. in between the stake and the cross beam, and
- Fig. 10: is an enlarged side view of the lower part of the stake arrangement shown in Fig. 1 in accordance with the invention.

### DETAILED DESCRIPTION

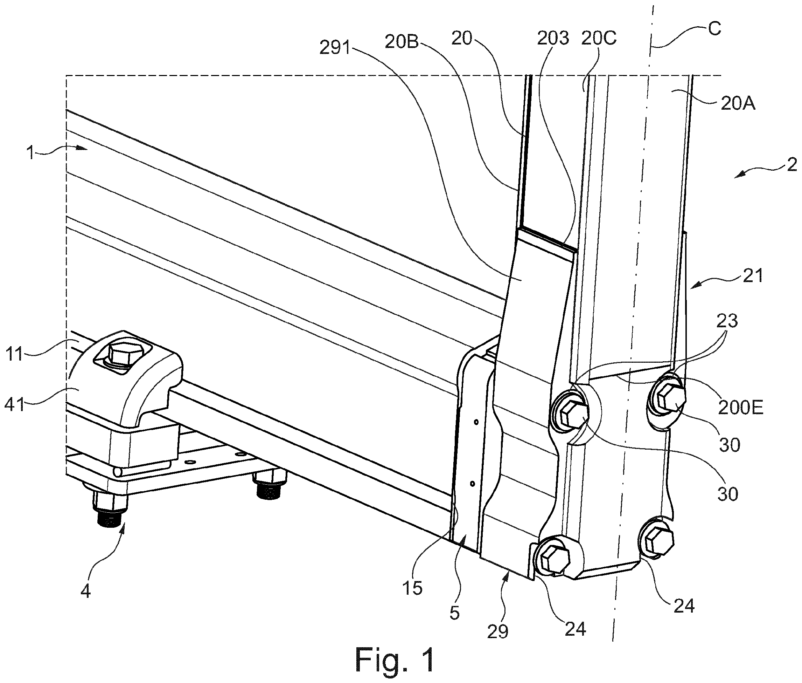

In figure 1, it is shown a stake arrangement according to the invention comprising a horizontal cross beam 1 and a vertical stake arrangement 2 attached to the end of the cross beam 1, by means of screws 30.

As shown the cross beam 1 preferably has an I-beam shape providing flanges 11 that are used for attaching the cross beam 1 to a vehicle. Further it is shown a fixation arrangement 4 (known per se) including a fixation clamp 41 that clamps against the flange 11 of the cross beam 1 to securely fixate the cross beam 1 to a vehicle (not shown).

The attachment arrangement includes four screws 30 to securely attach the stake arrangement 2 at an end surface 15, indirectly or directly, of the cross beam 1. The cross beam 1 is arranged with bores provided with threads, which bores may be deeper than the screw portion arrange with threads. There are four threaded bores provided in each cross beam 1, which bores extend in parallel to one and other in the longitudinal direction of the cross beam 1. A plurality of corresponding openings 23, 24 are provided at the lower end of the stake arrangement 2, which extend transversally in relation to the longitudinal axis C of the stake arrangement 2. These openings 23, 24 are aligned with the threaded bores, in the cross beam 1. The screws 30 are arranged through the openings 23, 24 of the stake arrangement 2 and engage the threads in the cross beam 1 to securely connect the lower end of the stake arrangement 2 against the end surface 15 of the cross beam 1. A distance piece 5 is preferably arranged between the stake arrangement 2 and the end surface 15 of the cross beam 1, providing extra volume within the loading space enclosed by the stake members 20.

The stake arrangement 2 has one side 20B facing the end 15 of the cross beam 1 and opposite side 20A facing away from said end 15. The screws 30 are applied through stake 2 from the side 20A that is facing away from the end 15 of the cross beam, which provides for easy access when handling the screws 30.

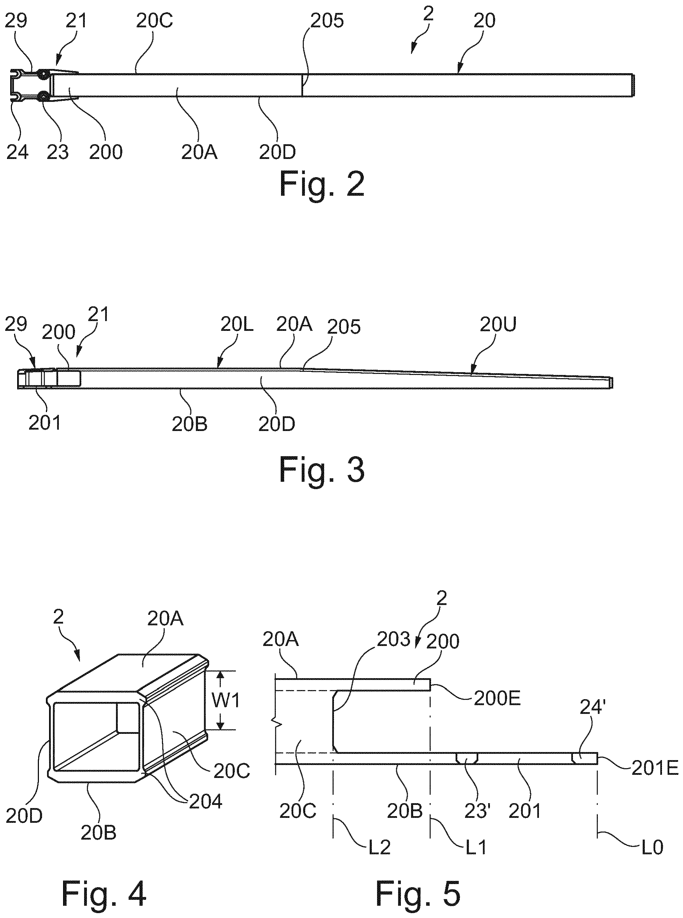

In Figs. 2 and 3 there are shown two views of a stake arrangement according to the invention, wherein Fig. 2 shows a front view and Fig. 3 shows a side view. It is shown that the stake arrangement comprises a plurality of parts that are put together to form the stake arrangement 2, i.e. an upper stake member 20 integrated with a lower stake member 21. The upper stake member 20 comprises a lower part 20L and an upper part 20U. There lower stake member 21 is fixedly attached to the lower end of the upper stake member 20 by means of welding.

The lower stake member 21 comprises a stake member body 29, which comprises the through holes 23, 24 described above, and an enforcement member 28.

According to a preferred embodiment of the invention, see Fig. 5, the different sides 20A-D of the lower part of the upper stake member 20 are ended at different levels L1, L2, L3. As shown in Figs. 2, 3 and 5 the front face 20A of the upper stake member 20 has a lower front part 200 with a lower end 200E that ends at an intermediate position L1 between a lower position L0 and an upper position L2. The backside 20B of the stake presents a lower back part 201 that has a lower edge 201E in level with the lower level L0. This lower back part 201is arranged with holes 23', 24' adapted to house the screws 30. Both of the side faces 20C, 20D of the upper stake member 20 has a lower end 203 that terminates at an upper level L2. The upper stake member 20 is welded along the edges as shown in Fig. 5 and also Figs. 1, 2 and 3 to be integrated with the lower stake member 21, as described more in detail below.

Furthermore, Figs. 2 and 3 show that in the preferred embodiment the upper part 20U of the upper stake member 20 is arranged to be tapering from a midpoint 205 towards the upper end of the stake.

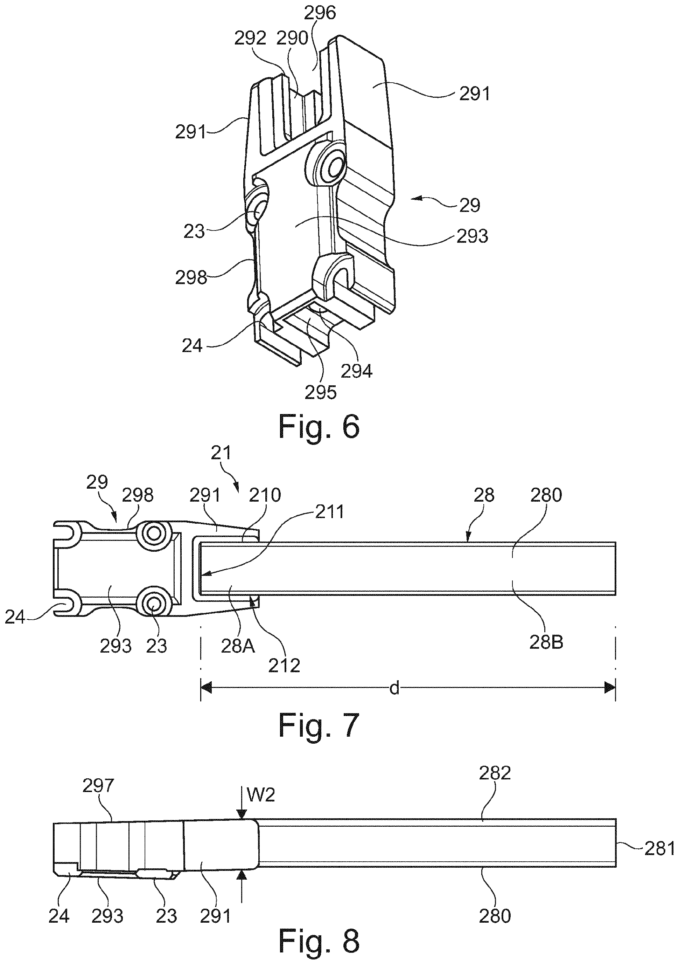

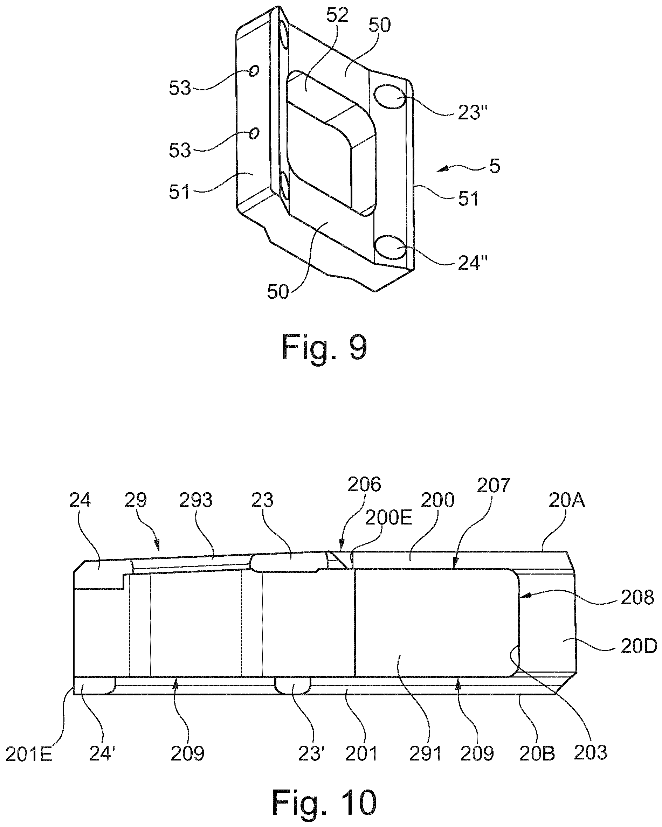

In Fig. 4 there is shown a preferred perspective cross-sectional view of a profile to be used for upper stake member 20 according to the invention. Preferably this profile is produced by extruding and most preferred by means of being extruded in aluminium. The tapering of the upper part 20U of the upper stake member 20 is arranged for after extrusion of the profile, by means of forging the upper stake member to obtain the desired tapered form. In this regard it is beneficial to have the side walls 20C, 20D to be thinner than the front and back walls 20A, 20B. Moreover, preferably the outer surfaces of the side walls 20C, 20D are positioned inside of the outer corner ends of the front and back walls 20A, 20B, which may assist in easier obtaining the desired tapered form. Preferably the thinner walls are obtained by creating recesses along each side wall 20 C, D which may assist in easier assembly and stronger welds by providing protruding corner sections 204, by means of having each side wall 20 C, D with a width W1 that is adapted to the width W2 (see Fig. 8) of wing members 291 of the body member, such that the wing members 291 fit into the recess and the protruding corner sections 204 provide strengthening support parts for longitudinal welds 207, 209 (see Fig. 10).

In Fig. 6 there is shown a perspective view of the body member 29 included in the lower stake member 21. It can be noted that the body member 29 is made from a solid piece of material, preferably aluminium. There is shown a kind of central body part, which is substantially solid, that at its periphery is arranged with the holes 23, 24. At the front side of that part of the body member 29 there is a protruding central plate like member 293. The main purpose of the protruding central plate like member 293 is to provide weldable support material for the front part 200 of the upper stake member 20. As a further benefit it may provide support for the screw heads (not shown) of the screws used for attaching the stake arrangement 2 to the cross beam. Accordingly, the central plate like member 293 may also provide lateral support in some directions for screw heads, which may increase safety once the stake arrangement 2 is attached to the cross beam 1.

Further, it is shown that there are two upwardly protruding wing members 291, which are symmetrically positioned on opposite sides of the body member 29. Each wing member 291 will be positioned on one side of the stake arrangement 2, i.e. in line with each side faces 20C, 20D of the assembled stake arrangement.

In between the wing members 291 there is arranged an open space 290. The open space 290 is intended for mounting of the enforcement member 28. Preferably the wing members 291 have a width corresponding to the width of the enforcement member 28. Further, preferably the support wings 291 at their inner sides are provided with rib members 292. More preferred the longitudinal extension of each wing members 291 is greater than the width of the wing members 291. Further, there may be arranged weight reducing features, e.g. a centrally positioned longitudinally extending bore 294 through the main part of the body member 29, cut outs 295, 298 etc, to reduce the weight of the body member 29.

Figs. 7 and 8 show a front view and a side view of a lower stake member 21, wherein a lower part 28A of the enforcement member 28 has been welded into position within the body member 29. An upper part 28B of the enforcement member 28 will then protrude above the upper edges of the wing members 291. It is shown that in the preferred embodiment the enforcement member 28 has an I-beam shape. Hence there is a central beam wall 281 that at each longish side thereof has arranged transversal longish members 280, 282. Preferably, the enforcement member 28 has a longitudinal extension d that exceeds the width at least three times, more preferred having a longitudinal extension d that exceeds the width in the range of 4-12 times.

Fig. 10 shows a lower end of an assembled stake arrangement, where the enforcement member 28 is hidden within the inner of the upper stake member 20. It is shown that there is a weld 206 of substantial dimension applied at the top of the protruding central plate like member 293 of the body member 29 to join it with the lower edge 200E of the front face part 200 of the upper stake member 20. Further it is shown that there are longitudinal extending welds 207, 209 and a transversal weld 208 arranged on each side 20C, 20D of the stake arrangement. The first longitudinal weld 207 joins the longitudinal sides of the lower front face part 200 with the wing members 291. The other longitudinal welds will join both the sides of the wing members 291 and also join with the corner at the back of the body member 29, such that it extends all the way down to the lower end of stake arrangement 2. The transversal welds 208 will join the transversal edge of the wing member 291 with the sides 20C, 20D of the upper stake member 20. Further, figs. 5 and 7 shows an edge marking indicating a transition for start of the wing members 291 and that their opposing outwardly exposed surfaces are tapering.

In Fig. 9 there is shown a distance piece 5 that preferably may be arranged between the cross beam 1 and the stake arrangement, such that an increased distance is provided between the stakes and thereby creating a larger space for loading. The distance piece 5 is arranged with holes 23", 24" adapted to house the screws 30. Further distance piece 5 preferably is arranged with longitudinal side portions 51 that have a larger thickness than a central part 50, to enable arrangement of tapered surfaces adapted to provide exact fit with the outer surface of the back side 20B of the extruded profile of the stake arrangement 2. There may preferably be arranged attachment holes 53 for attaching chains fork, quick release, etc and preferably also weight reducing features 52.

The invention is not limited by the examples describe above but by maybe varied within the scope of the appended claims, e.g. to vary the number of screws being used to fit different needs, etc. Moreover, it is evident for the skilled person that the upper stake member 20 can be in the form of a telescopic kind.

## Claims

1. A stake arrangement including a vertical stake (2) for connecting a lower end of said vertical stake (2) to a horizontal cross-beam (1) adapted to be attached to a beam in a carrying structure of a vehicle, said arrangement comprising:
- said cross-beam (1) having an end surface (15);
- a plurality of bores provided with threads in said end surface (15), said threaded bores extending in a longitudinal direction of the cross-beam (1), preferably in parallel to one another,
- a plurality of openings (23, 24) provided at said lower end of the stake (2), said plurality of openings extending crosswise in relation to a longitudinal axis (C) of the vertical stake (2) and being aligned with the threaded bores; and
- a plurality of screws (30) extending through the openings (23, 24) of the vertical stake (2) and engaging the threads of the threaded bores in the cross-beam (1) to connect the lower end of the vertical stake (2) to the end surface (15) of the cross-beam, **characterized in that** said vertical stake (2) comprises an upper stake member (20) and a lower stake end member (21), which are fixedly attached to each, wherein said lower stake end member (21) includes a body member (29) including said plurality of openings (23, 24), and that a longish reinforcement member (28) is included in said lower stake end member (21), said reinforcement member (28) having an upper portion (28B) protruding a distance (d) into an open inner space of said upper stake member (20).

2. Stake arrangement as claimed in claim 1, wherein said upper stake member (20) is fixedly attached to said lower stake end member (21) by welds (206, 207, 208, 209), wherein preferably said upper stake member (20) has a front face (20A) having a lower edge (200E) that is positioned at a higher level (L1) than a lower edge (201E) of a back face (20B) of said upper stake member (20).

3. Stake arrangement as claimed in claim 2, wherein said upper stake member (20) has side faces (20C, 20D) having lower edges (203) positioned at a higher level (L2) than said lower edge (200E) of said front face (20A) of said upper stake member (20).

4. Stake arrangement according to any preceding claim, **characterised in that** said body member (29) includes a support space (290) arranged to provide support to a lower part (28A) of said enforcement member (28).

5. Stake arrangement according to claim 4, **characterised in that** said support space (290) is provided by means of two wing members (291).

6. Stake arrangement according to claim 5, **characterised in that** said wing members (291) have a width (W2) corresponding to the width of the reinforcement member (28) and preferably that the support wings (291) at their inner sides are provided with rib members (292).

7. Stake arrangement according to claim 6, **characterised in that** said wing members (291) merely extend on two opposite sides of said stake arrangement (2) and preferably that the longitudinal extension is greater than the width of the wing members (291).

8. Stake arrangement according to any preceding claim, **characterised in that** said reinforcement member (28) has a longitudinal extension that exceeds the width at least two times, preferably having a longitudinal extension that exceeds the width in the range of 4-12 times.

9. Stake arrangement according to claim 8, **characterised in that** said reinforcement member (28) is in the form of a profile that is mirror symmetric in relation to two orthogonal longitudinal planes.

10. Stake arrangement according to claim 9 **characterised in that** said enforcement member has the form of an I-beam.

11. Method for producing a stake arrangement (2) according to claim 1, **characterized by** producing said stake upper member (20) by means of extruding a profile and preferably arranging a tapered upper part (20U) by means of pressing or forging after having extruded said profile.
